# EUROPEAN PATENT SPECIFICATION

(11) **EP 2 010 786 B1**
(45) Date of publication and mention of the grant of the patent: **29.10.2014**
(21) Application number: 07741236.9
(22) Date of filing: 03.04.2007
(51) Int. Cl.: F04B 39/10

(54) **HERMETIC COMPRESSOR**
HERMETISCHER VERDICHTER
COMPRESSEUR HERMETIQUE

(30) Priority: 06.04.2006 JP 2006104854
(43) Date of publication of application: 07.01.2009
(73) Proprietor: Panasonic Corporation, Kadoma-shi Osaka 571-8501 (JP)
(72) Inventor: WATANABE, Kiwamu, Osaka-shi, Osaka, 540-6206 (JP)
(74) Representative: Pautex Schneider, Nicole Véronique
(86) International application number: PCT/JP2007/057800
(87) International publication number: WO 2007/116989

(56) References cited:
- WO-A-2006/027864
- JP-A- 55 024 276
- US-A- 5 676 533
- US-A- 5 775 887
- US-A- 5 887 622

## Description

### TECHNICAL FIELD

The present invention relates to a compressor used in a refrigerator freezer or the like.

### BACKGROUND ART

Some conventional hermetic compressors have a discharge valve device that reduces noise during operation and increases energy efficiency by reducing the loss during opening/closing a discharge reed, as disclosed in Japanese Patent Unexamined Publication No. H09-105383, for example.

A conventional hermetic compressor is described hereinafter with reference to the accompanying drawings.

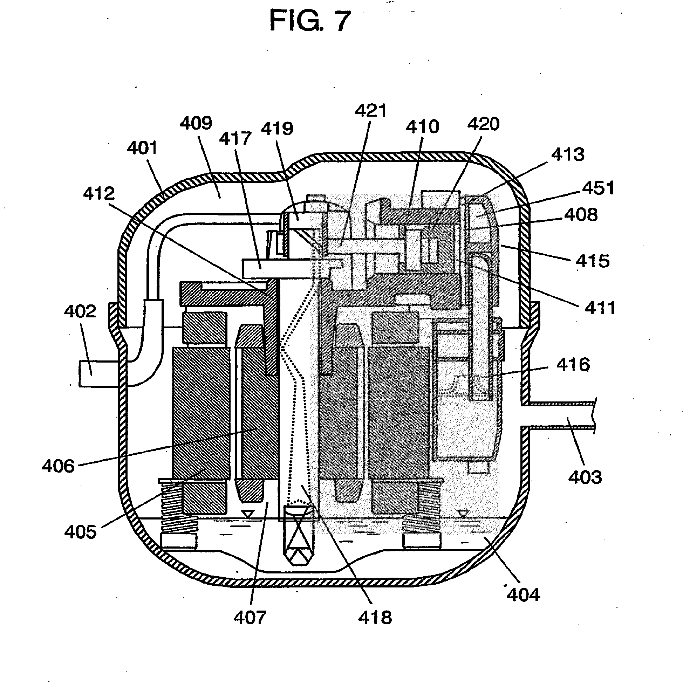

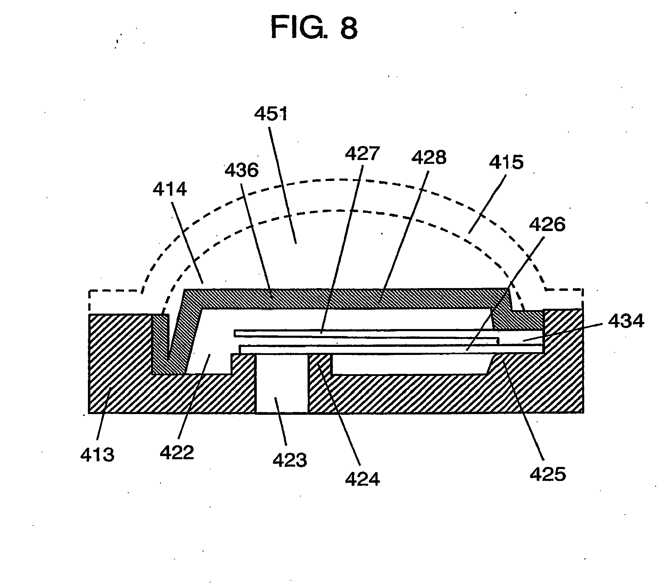

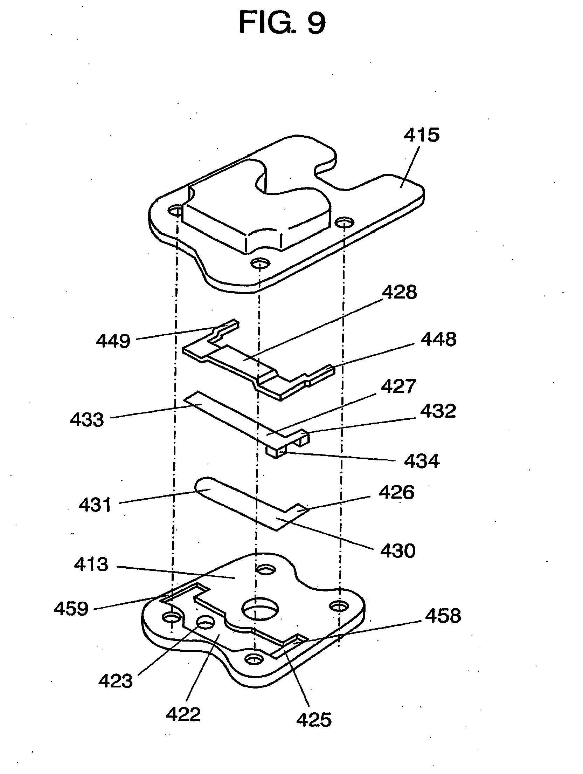

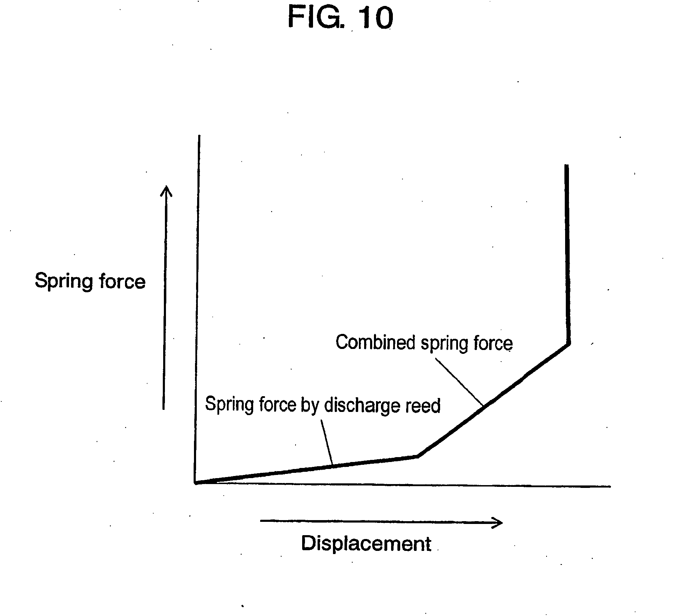

Fig. 7 is a sectional view of the conventional hermetic compressor. Fig. 8 is a side sectional view of a discharge valve device of the conventional hermetic compressor. Fig. 9 is an exploded view of the discharge valve device of the conventional hermetic compressor. Fig. 10 is a spring characteristic diagram of the conventional hermetic compressor.

In Fig. 7, Fig. 8, Fig. 9, and Fig. 10, closed housing 401 has discharge pipe 402 and suction pipe 403 that are coupled to a cooling system (not shown). Closed housing 401 reserves oil 404 on its bottom, stores motor element 407 formed of stator 405 and rotor 406 and compression mechanism 408 driven by motor element 407, and is filled with refrigerant 409.

A main structure of compression mechanism 408 is described hereinafter. Cylinder 410 has substantially cylindrical compression chamber 411 and bearing 412. Valve plate 413 has discharge valve device 414 on the opposite side to cylinder 410 and blocks compression chamber 411. Head 415 covers valve plate 413. One end of suction muffler 416 is opened in closed housing 401, and the other end thereof communicates with the inside of compression chamber 411. Crankshaft 417 has main shaft 418 and eccentric section 419, and is pivoted on bearing 412 of cylinder 410. Rotor 406 is pressed and fitted to crankshaft 417. Piston 420 is inserted into compression chamber 411 reciprocation-slidably, and is connected to eccentric section 419 through connecting rod 421.

Discharge valve device 414 included in compression mechanism 408 is described hereinafter. Valve plate 413 has a horizontally long recessed part 422 on the opposite side to cylinder 410. The bottom of recessed part 422 has discharge port 423 communicating with cylinder 410, valve seat 424 formed so as to cover discharge port 423, and pedestal 425 formed substantially on the same plane as valve seat 424. Both ends of recessed part 422 have mounting sections 458 and 459 for fixing fixed sections 448 and 449 on both ends of stopper 428, respectively.

Stopper 428 has fixed sections 448 and 449 for fixing stopper 428 and regulating section 436 for holding discharge reed 426 and spring reed 427 between stopper 428 and pedestal 425 and regulating the opening amount of spring reed 427. Regulating section 436 of stopper 428 is shaped in a side shape substantially parallel with the plane including valve seat 424 and pedestal 425.

Discharge reed 426 is made of tongue-like leaf spring material, and has discharge reed holding section 430 fixed to pedestal 425 and opening/closing section 431 for opening and closing valve seat 424. Spring reed 427 is made of tongue-like leaf spring material, and has spring reed holding section 432 fixed to pedestal 425 and movable section 433. A proximity of holding section 432 has spacer 434 that is folded a plurality of times and integrated with the upper surface of the proximity of discharge reed holding section 430.

Discharge reed 426 and spring reed 427 are disposed in that order on the bottom of recessed part 422. Fixed sections 448 and 449 of stopper 428 are locked to mounting sections 458 and 459, respectively. Head 415 is fastened, pressed and fixed via packing for preventing outflow of refrigerant gas disposed between head 415 and valve plate 413. Thus, spacer 434 of spring reed 427 and discharge reed holding section 430 are elastically held between fixed sections and pedestal 425 of valve plate 413, so that spring reed 427 and discharge reed 426 are separated from each other by a predetermined clearance.

Movable section 433 of spring reed 427 is not fixed, and is separated from regulating section 436 of stopper 428 by a predetermined clearance. However, spacer 434 is disposed between spring reed holding section 432 and discharge reed holding section 430, so that movable section 433 of spring reed 427 is disposed in parallel with opening/closing section 431 of discharge reed 426.

An operation of the hermetic compressor having above-mentioned structure is described hereinafter. When electric power is supplied to motor element 407, rotor 406 rotates to rotate crankshaft 417. At this time, eccentric rotation of eccentric section 419 transfers to piston 420 via connecting rod 421, thereby reciprocating piston 420 in compression chamber 411.

Refrigerant 409 in closed housing 401 is sucked from suction muffler 416 into compression chamber 411 with reciprocation of piston 420, and low-pressure refrigerant 409 flows from the cooling system (not shown) into closed housing 401 through suction pipe 403. Refrigerant 409 sucked into compression chamber 411 is compressed, and is discharged to discharge chamber 451 through discharge valve device 414 of valve plate 413. Here, discharge chamber 451 is formed in head 415. High-pressure gas discharged into discharge chamber 451 is discharged from discharge pipe 402 to the cooling system (not shown).

At this time, discharge valve device 414 performs an opening/closing operation as follows: discharge reed 426 opens to connect the inside of compression chamber 411 to the inside of discharge chamber 451 via discharge port 423, and discharge reed 426 closes to seal the inside of compression chamber 411 and the inside of discharge chamber 451.

Characteristics of discharge valve device 414 are described. When discharge valve device 414 opens, opening/closing section 431 of discharge reed 426 opens firstly and touches movable section 433 of spring reed 427. Until the touching, the spring constant is produced only by discharge reed 426 and is low. After the touching, the spring constant is produced by combination of discharge reed 426 and spring reed 427. After spring reed 427 touches stopper 428, a double-supported state is obtained and hence the spring constant increases extremely. The valve characteristics have three stages of spring constant as discussed above. In closing discharge valve device 414, opening/closing section 431 of discharge reed 426 is closed by an obtained reaction force.

In other words, as shown in Fig. 10, the spring characteristic has two inflection points until discharge reed 426 starts to open, becomes integrated with spring reed 427, and touches regulating section 436 of stopper 428. Thanks to such a spring characteristic, weak spring force is obtained when discharge reed 426 opens, and strong spring force is obtained when it closes. Therefore, discharge reed 426 easily opens, over compression is reduced, and the efficiency can be improved.

When the clearance between movable section 433 of spring reed 427 and opening/closing section 431 of discharge reed 426 varies, the inflection point varies where a spring force only by discharge reed 426 transfers to a combined spring force by discharge reed 426 and spring reed 427. As a result, the opening amount and closing timing of discharge reed 426 are apt to fluctuate, and the freezing capacity and efficiency are apt to fluctuate.

As discussed above, spacer 434 is formed integrally with spring reed 427, a clearance is formed between spring reed holding section 432 and discharge reed holding section 430, and movable section 433 of spring reed 427 and opening/closing section 431 of discharge reed 426 are disposed in parallel. As a result, the clearance between movable section 433 and opening/closing section 431 becomes stable, and displacement of discharge reed 426 until it opens and touches spring reed 427 reduces the variation. Therefore, the inflection point does not vary where the spring force only by discharge reed 426 transfers to the combined spring force by discharge reed 426 and spring reed 427, and the spring characteristic does not vary.

As a result, the opening amount and closing timing of discharge reed 426 become stable, and hence fluctuation in freezing capacity and efficiency is reduced.

In the conventional structure, however, movable section 433 of spring reed 427 and opening/closing section 431 of discharge reed 426 are disposed in parallel. Therefore, when opening/closing section 431 of discharge reed 426 opens and touches movable section 433 of spring reed 427, the contact angle of the tip of opening/closing section 431 with spring reed 427 increases and hence spring reed 427 can be damaged and broken.

While, when height of spacer 434 is reduced in order to decrease the contact angle of the tip of opening/closing section 431 of discharge reed 426 with spring reed 427, the clearance between opening/closing section 431 and movable section 433 of spring reed 427 decreases. As a result, inflection points of Fig. 10 move to the side of smaller displacement, the spring force generated when the opening/closing section 431 opens increases before the displacement becomes large, and the over compression increases to increase the input. As a result, the efficiency of the hermetic compressor decreases disadvantageously.

US5775887 and US5676533 disclose a hermetic type compressor which makes opening and closing of an exhaust valve installed inside a reentrant groove formed in a cylinder head smooth, and prevents leakage of refrigerant from the exhaust valve by fabricating a valve seat surface to be in the same height as that of a valve fixing surface. The hermetic type compressor includes a cylinder head containing an exhaust hole through which compressed refrigerant is discharged from the inside a cylinder and having a valve seat surface in its outer periphery, and a reentrant groove having a valve fixing surface and a fixed groove formed therein; an exhaust valve installed so as to be open or shut on the upper surface of the exhaust hole; a valve spring disposed on the exhaust valve for defining the operation of the exhaust valve; a retainer having a fixed end for fixing the exhaust valve and valve spring in its one end, and having in its other end a flexible part for controlling the variance of the exhaust valve and valve spring and another fixed end which is extended from the flexible part and is fixed in the fixed groove of the reentrant groove; a head cover for covering the cylinder head on the retainer; and a packing inserted between the cylinder head and the head cover for preventing the leakage of the refrigerant.

JP 55024276 discloses a reed valve, by which the characteristic of engine output can be improved, by providing an auxiliary reed on the main reed so that a gap, by which the auxiliary reed is not influenced by the displacement of the main reed in the range of desired number of rotations of the engine, is formed. The auxiliary reed is provided to the base of the main reed made of elastic material such as metal, which opens and closes the port of the valve seat in the reed valve proper, so that a gap, by which the auxiliary reed is not influenced by the displacement of the main reed in the range of desired number of rotations of the engine, is formed. The gap can be formed by a spacer or by providing the rear of stopper between both the reeds at their mounting base on the valve seat.

### SUMMARY OF THE INVENTION

The present invention relates to a hermetic compressor according to claim 1.

### BRIEF DESCRIPTION OF DRAWINGS

Fig. 1 is a sectional view of a hermetic compressor in accordance with exemplary embodiment 1 of the present invention.
Fig. 2 is a plan view of the hermetic compressor in accordance with exemplary embodiment 1.
Fig. 3 is a side sectional view of a discharge valve device of the hermetic compressor in accordance with exemplary embodiment 1.
Fig. 4 is an exploded view of the discharge valve device of the hermetic compressor in accordance with exemplary embodiment 1.
Fig. 5 is a bottom view of a stopper of the hermetic compressor in accordance with exemplary embodiment 1.
Fig. 6 is a spring characteristic diagram of the hermetic compressor in accordance with exemplary embodiment 1.
Fig. 7 is a sectional view of a conventional hermetic compressor.
Fig. 8 is a side sectional view of a discharge valve device of the conventional hermetic compressor.
Fig. 9 is an exploded view of the discharge valve device of the conventional hermetic compressor.
Fig. 10 is a spring characteristic diagram of the conventional hermetic compressor.

### DETAILED DESCRIPTION OF PREFERRED EMBODIMENTS

Exemplary embodiments of compressors of the present invention will be described hereinafter with reference to the accompanying drawings.

### FIRST EXEMPLARY EMBODIMENT

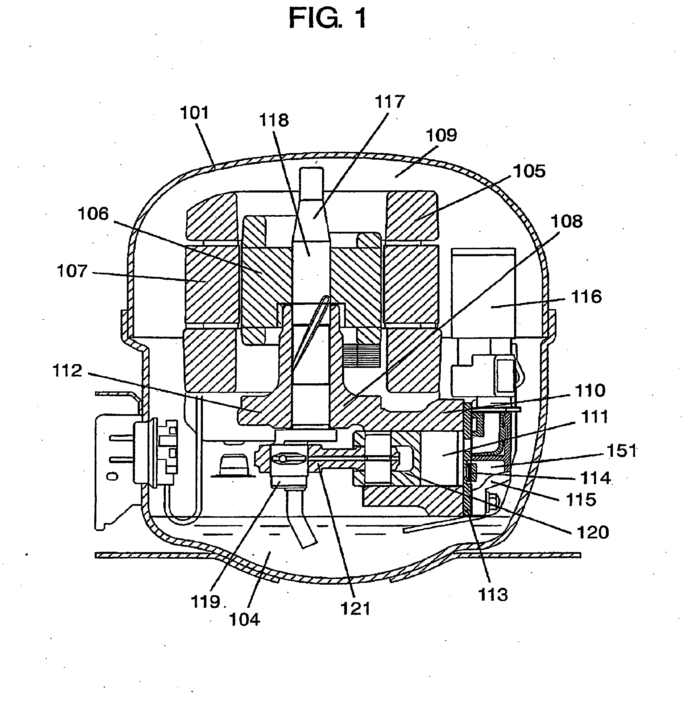

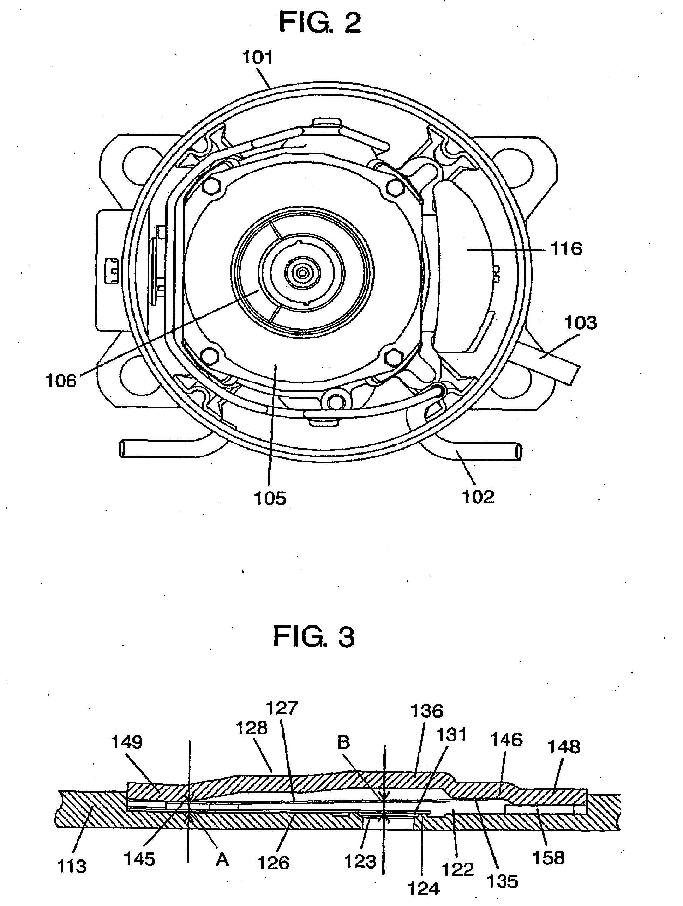

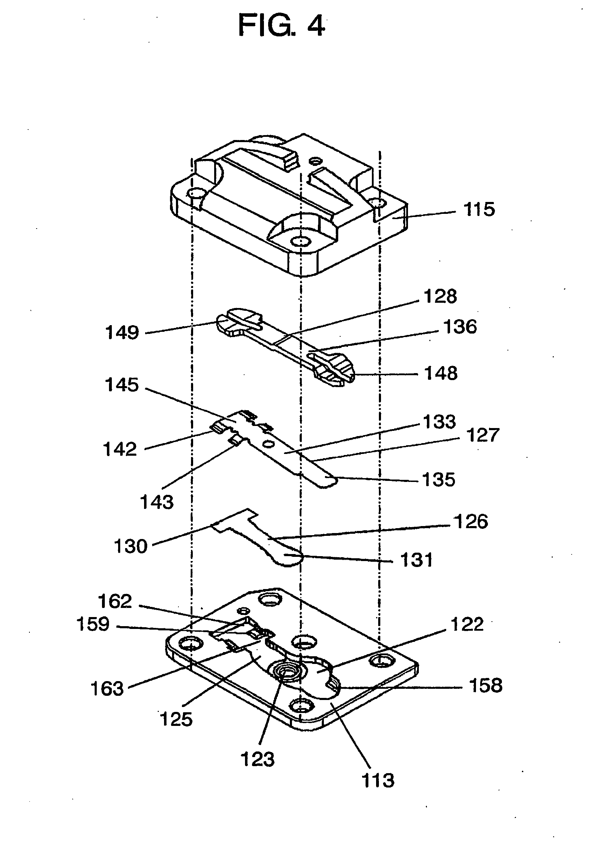

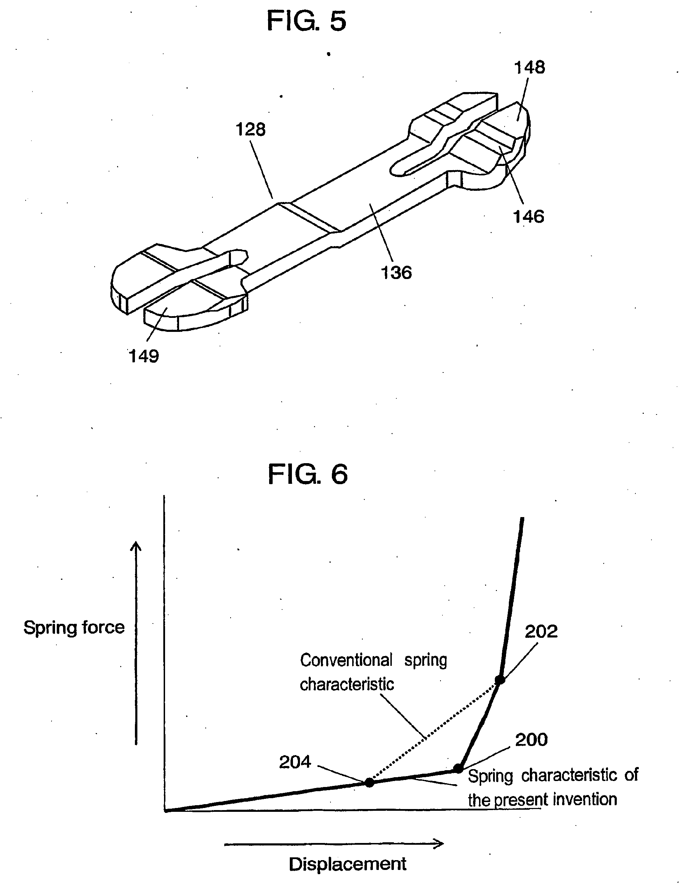

Fig. 1 is a sectional view of a hermetic compressor in accordance with exemplary embodiment 1 of the present invention. Fig. 2 is a plan view of the hermetic compressor in accordance with exemplary embodiment 1. Fig. 3 is a side sectional view of a discharge valve device of the hermetic compressor in accordance with exemplary embodiment 1. Fig. 4 is an exploded view of the discharge valve device of the hermetic compressor in accordance with exemplary embodiment 1. Fig. 5 is a bottom view of a stopper of the hermetic compressor in accordance with exemplary embodiment 1. Fig. 6 is a spring characteristic diagram of the hermetic compressor in accordance with exemplary embodiment 1.

In Fig. 1, Fig. 2, Fig. 3, Fig. 4, Fig. 5, and Fig. 6, closed housing 101 has discharge pipe 102 and suction pipe 103 that are coupled to a cooling system (not shown). Closed housing 101 reserves oil 104 on its bottom, stores motor element 107 formed of stator 105 and rotor 106 and compression mechanism 108 driven by motor element 107, and is filled with refrigerant 109.

A main structure of compression mechanism 108 is described hereinafter. The hermetic compressor includes cylinder 110 and piston 120 which reciprocates inside cylinder 110. Cylinder 110 has substantially cylindrical compression chamber 111 and bearing 112. Valve plate 113 has discharge valve device 114 on the opposite side to cylinder 110, and blocks discharge chamber 151 formed in head 115 and compression chamber 111. In other words, valve plate 113 seals the opening end of cylinder 110. Discharge chamber 151 stores discharge valve device 114. Head 115 covers valve plate 113. One end of suction muffler 116 is opened in closed housing 101, and the other end thereof communicates with the inside of compression chamber 111.

Crankshaft 117 has main shaft 118 and eccentric section 119, and is pivoted on bearing 112 of cylinder 110. Rotor 106 is pressed and fitted to crankshaft 117. Piston 120 is inserted into compression chamber 111 reciprocation-slidably, and is connected to eccentric section 119 through connecting rod 121.

Discharge valve device 114 included in compression mechanism 108 is described hereinafter. Valve plate 113 has a long recessed part 122 on the opposite side to cylinder 110. The bottom of recessed part 122 has discharge port 123 communicating with cylinder 110, valve seat 124 formed so as to cover discharge port 123, and pedestal 125 formed substantially on the same plane as valve seat 124. Both ends of recessed part 122 have mounting sections 158 and 159 for fixing fixed sections 148 and 149 on both ends of stopper 128, respectively.

Holding grooves 162 and 163 for burying and fixing a plurality of leg sections 142 and 143 of spring reed 127 (described later) are formed near mounting section 159 at the same height as pedestal 125.

Stopper 128 has fixed sections 148 and 149 for fixing stopper 128, and regulating section 136 for holding discharge reed 126 and spring reed 127 between stopper 128 and pedestal 125 and regulating the opening amount of discharge reed 126. Regulating section 136 of stopper 128 is shaped in a side shape substantially parallel with the plane including valve seat 124 and pedestal 125.

Stopper 128 has touching section 146 at a position corresponding to tip 135 of spring reed 127. Abutting section 146 has a step that is lower than fixed section 148 and is formed by press working

Discharge reed 126 is made of tongue-like leaf spring material, and has discharge reed holding section 130 to be fixed to pedestal 125 and opening/closing section 131 for opening and closing valve seat 124. Discharge reed holding section 130 is engaged with holding groove 162 disposed in valve plate 113.

Spring reed 127 is made of tongue-like leaf spring material, and has a plurality of pairs of leg sections 142 and 143 and movable section 133. Here, leg sections 142 and 143 are fixed to holding grooves 162 and 163 that are formed at the same height as pedestal 125. Leg sections 142 and 143 are folded on both sides of the proximity of fixed end 145 of spring reed 127, and are engaged with holding grooves 162 and 163 disposed in valve plate 113. Fixed end 145 pressed by stopper 128 is disposed between leg sections 142 and 143.

Discharge reed 126 and spring reed 127 are disposed in that order on the bottom of recessed part 122. Fixed sections 148 and 149 of stopper 128 are locked to mounting sections 158 and 159, respectively. Head 115 is fastened, pressed and fixed via packing for preventing outflow of refrigerant gas existing between head 115 and valve plate 113. Thus, leg sections 142 of spring reed 127 and discharge reed holding section 130 are elastically held between head 115 and pedestal 125 of valve plate 113. In other words, fixed end 145 of spring reed 127 is held between valve plate 113 and stopper 128, thereby fixing discharge reed 126 and spring reed 127 to valve plate 113 at a predetermined clearance. Spring reed 127 is of a cantilever type, is longer than discharge reed 126, and is disposed on the opposite side of discharge reed 126 to valve plate 113.

Fixed section 149 of stopper 128 presses fixed end 145 formed between leg sections 142 and 143 of spring reed 127 so as to keep the predetermined clearance shown by A of Fig. 3 between spring reed 127 and discharge reed 126.

Therefore, tip 135 is lifted up toward the opposite side (the side of stopper 128) to pedestal 125, and a clearance shown by B between movable section 133 of spring reed 127 and opening/closing section 131 of discharge reed 126 is larger than the predetermined clearance shown by A. Tip 135 touches touching section 146 of stopper 128, thereby accurately keeping the clearance shown by B at a predetermined size.

An operation of the hermetic compressor having the above-mentioned structure is described hereinafter. When electric power is supplied to motor element 107, rotor 106 rotates to rotate crankshaft 117. At this time, eccentric rotation of eccentric section 119 transfers to piston 120 via connecting rod 121, thereby reciprocating piston 120 in compression chamber 111.

Refrigerant 109 in closed housing 101 is sucked from suction muffler 116 into compression chamber 111 with reciprocation of piston 120, and low-pressure refrigerant 109 flows from the cooling system (not shown) into closed housing 101 through suction pipe 103. Refrigerant 109 sucked into compression chamber 111 is compressed, and is discharged to discharge chamber 151 formed in head 115 through discharge valve device 114 of valve plate 113. High-pressure gas discharged into discharge chamber 151 is discharged from discharge pipe 102 to the cooling system (not shown).

At this time, discharge valve device 114 performs an opening/closing operation as follows: discharge reed 126 opens to connect compression chamber 111 to discharge chamber 151 via discharge port 123, and discharge reed 126 closes to seal compression chamber 111 and discharge chamber 151.

Characteristics of discharge valve device 114 are described. When discharge valve device 114 is opened, opening/closing section 131 of discharge reed 126 opens and touches movable section 133 of spring reed 127. Until the touching, the spring constant is produced only by discharge reed 126 and hence is low. After the touching, the spring constant is produced by combination of discharge reed 126 and spring reed 127.

After spring reed 127 touches stopper 128, a double-supported state is obtained and hence the spring constant increases extremely. The valve characteristics have three stages of spring constant as discussed above. Opening/closing section 131 of discharge reed 126 is closed by an obtained reaction force of the spring.

In embodiment 1, spring reed 127 is separated from discharge reed 126 at fixed end 145 by the predetermined clearance, and is separated from it at opening/closing section 131 by the clearance larger than that at fixed end 145. Therefore, regarding the spring characteristic, the inflection point moves where the spring force produced by discharge reed 126 transfers to the combined spring force by discharge reed 126 and spring reed 127, and the displacement range having a small spring constant can be extended at the beginning of opening of discharge reed 126.

These characteristics are described hereinafter with reference to the drawings. Fig. 6 is a spring characteristic diagram of the hermetic compressor in accordance with exemplary embodiment 1 of the present invention. The solid line shows the spring characteristic of the present invention, and the broken line shows the conventional spring characteristic for comparison. Inflection points 200 and 202 of the spring characteristic of the present invention are shown together with inflection points 202 and 204 of the conventional spring characteristic for comparison. As shown in Fig. 6, inflection point 204 of the conventional spring characteristic moves to inflection point 200 of the spring characteristic of the present invention. Therefore, the displacement range having a small spring constant can be extended at the beginning of opening of discharge reed 126.

When the period when the low spring force only by discharge reed 126 works is long, over compression can be reduced and hence the efficiency of the hermetic compressor can be increased.

In embodiment 1, tip 135 of spring reed 127 touches touching section 146 of stopper 128, so that the clearance size shown by B between movable section 133 of spring reed 127 and opening/closing section 131 of discharge reed 126 becomes stable.

As a result, when discharge reed 126 opens, variation in displacement until touching spring reed 127 becomes small. In other words, variation in inflection point decreases where the spring force produced by discharge reed 126 transfers to the combined spring force by discharge reed 126 and spring reed 127, so that the opening amount and closing timing of discharge reed 126 become stable, and hence fluctuation in freezing capacity and efficiency is reduced.

At a starting time of the hermetic compressor, refrigerant 109 and oil 104 are returned from the freezing cycle (not shown). Both refrigerant 109 and oil 104 are compressed and discharged, so that there are much oil 104 between discharge reed 126 and spring reed 127.

Generally, the suction pressure is high at the starting time of the hermetic compressor, and refrigerant 109 of relatively high density is compressed and discharged until decompression of the inside of closed housing 101, so that a large load is applied to opening/closing section 131 of discharge reed 126.

The displacement of opening/closing section 131 of discharge reed 126 is regulated by regulating section 136 of stopper 128, so that opening/closing section 131 is strongly pressed to movable section 133 of spring reed 127 by refrigerant 109 of high density. Here, movable section 133 is disposed between opening/closing section 131 and regulating section 136 of stopper 128. Since the large pressing load works, opening/closing section 131 of discharge reed 126 is adsorbed to movable section 133 of spring reed 127 through oil 104.

Therefore, discharge reed 126 is opening for a long time after piston 120 passes the top dead center in compression chamber 111 and starts the suction process. During the opening, the high-pressure refrigerant flows back into compression chamber 111, the displacement volume of the piston substantially decreases, and the efficiency of the hermetic compressor can decrease.

In the hermetic compressor of embodiment 1, however, a plurality of pairs of leg sections 142 and 143 are folded on both sides of the proximity of fixed end 145 of spring reed 127. Fixed end 145 is held between valve plate 113 and stopper 128, thereby fixing discharge reed 126 and spring reed 127 to valve plate 113 at the predetermined clearance. The clearance between discharge reed 126 and spring reed 127 can therefore prevent adsorption of spring reed 127 to discharge reed 126 and can increase the freezing capacity and efficiency.

Since a new additional member is not required for forming the clearance, the number of components can be decreased, the cost is reduced, and the productivity is increased.

In the hermetic compressor of embodiment 1, stopper 128 has a step, and the step forms a step between touching section 146 touching tip 135 of spring reed 127 and fixed end 145 of spring reed 127. Therefore, when stopper 128 presses fixed end 145 of spring reed 127 to the side of valve plate 113, discharge reed holding section 130 is fixed by leg sections 142 of spring reed 127. Tip 135 of spring reed 127 is lifted up toward the opposite side to pedestal 125. Movable section 133 of spring reed 127 therefore has the large clearance that forms an angle with opening/closing section 131 of discharge reed 126, without lift processing of spring reed 127. Therefore, the displacement range having a small spring constant can be easily extended at the beginning of opening of discharge reed 126. The manufacturability of the hermetic compressor can be improved.

For certainly forming the angle with opening/closing section 131 of discharge reed 126, the part of stopper 128 that presses fixed end 145 of spring reed 127 is tilted by a predetermined angle.

When discharge reed 126 opens and touches movable section 133 of the spring reed, movable section 133 of the spring reed has a larger angle than the opening angle of opening/closing section 131 of discharge reed 126 in the same direction, and hence the contact angle between opening/closing section 131 and movable section 133 becomes small. In other words, opening/closing section 131 comes into contact with movable section 133 substantially face-to-face, so that the edge of opening/closing section 131 is prevented from damaging the contact part of movable section 133, and a compressor of high reliability can be provided.

Stopper 128 has touching section 146 having a step longitudinally; however, touching section 146 may be formed by forming a step on the surface of fixed section 148.

### INDUSTRIAL APPLICABILITY

The hermetic compressor of the present invention has a stable spring characteristic and high efficiency, and hence is usefully used in an air conditioner or a refrigerator freezer.

### REFERENCE MARKS IN THE DRAWINGS

- 110: cylinder
- 113: valve plate
- 114: discharge valve device
- 115: head
- 120: piston
- 123: discharge port
- 124: valve seat
- 126: discharge reed
- 127: spring reed
- 128: stopper
- 131: opening/closing section
- 135: tip (of spring reed)
- 142, 143: leg sections
- 145: fixed end
- 146: touching section (of stopper)
- 151: discharge chamber

## Claims

1. A hermetic compressor comprising:
a cylinder (110);
a piston (120) which reciprocates in the cylinder;
a valve plate (113) for sealing an opening end of the cylinder, the valve plate having a discharge valve device (114) on an opposite side to the cylinder; and
a head (115) forming a discharge chamber for storing the discharge valve device,
the discharge valve device (114) including:
a discharge port (123) disposed in the valve plate (113) and communicating with an inside of the cylinder (110);
a valve seat (124) formed on an opposite side of the discharge port to the cylinder;
a cantilever type discharge reed (126) made of leaf spring material, and having an opening/closing section for opening and closing the valve seat;
a cantilever type spring reed (127) disposed on an opposite side of the discharge reed to the valve seat, and being longer than the discharge reed; and
a stopper (128) for regulating an opening amount of the discharge reed;
wherein the spring reed (127) is separated from the discharge reed (126) at a fixed end of the spring reed by a predetermined clearance, and is separated from the discharge reed at the opening/closing section of the discharge reed by a clearance larger than that at the fixed end,
**characterised in that** the stopper (128) presses a position between a plurality of pairs of leg sections (142,143) of the spring reed (127), thereby lifting up a tip of the spring reed (127) to a side of the stopper (128).

2. The hermetic compressor of claim 1, wherein, the tip of the spring reed (127) touches a touching section of the stopper (128).

3. The hermetic compressor of claim 1, wherein,
the plurality of pairs of leg sections (142, 143) are folded on both sides of proximity of the fixed end of the spring reed (127), and the fixed end of the spring reed is held between the valve plate (113) and the stopper (128), thereby fixing the discharge reed and the spring reed to the valve plate with a predetermined clearance.

## Patentansprüche

1. Hermetischer Verdichter, der Folgendes umfasst:
einen Zylinder (110);
einen Kolben (120), der sich in dem Zylinder hin und her bewegt;
eine Ventilplatte (113) zum Verschließen eines Öffnungsendes des Zylinders, wobei die Ventilplatte eine Auslassventilvorrichtung (114) auf einer dem Zylinder entgegengesetzten Seite aufweist; und
einen Kopf (115), der eine Auslasskammer zum Lagern der Auslassventilvorrichtung bildet;
wobei die Auslassventilvorrichtung (114) Folgendes umfasst:
eine Auslassöffnung (123), die in der Ventilplatte (113) angeordnet ist und mit einer Innenseite des Zylinders (110) in Verbindung steht;
einen Ventilsitz (124), der auf einer dem Zylinder entgegengesetzten Seite der Auslassöffnung gebildet ist;
eine Auslasszunge (126) des Typs Ausleger, die aus einem Blattfedermaterial hergestellt ist, und einen Öffnungs/Schließabschnitt zum Öffnen und Schließen des Ventilsitzes aufweist;
eine Federzunge (127) des Typs Ausleger, die auf einer dem Ventilsitz entgegengesetzten Seite der Auslasszunge angeordnet ist und länger als die Auslasszunge ist; und
einen Verschluss (128) zum Regeln eines Öffnungsbetrages der Auslasszunge;
wobei die Federzunge (127) von der Auslasszunge (126) an einem festen Ende der Federzunge um einen vorbestimmten Abstand getrennt ist und von der Auslasszunge an dem Öffnungs/Schließabschnitt der Auslasszunge um einen Abstand getrennt ist, der größer ist als an dem festen Ende,
**dadurch gekennzeichnet, dass** der Verschluss (128) eine Stellung zwischen mehreren Paaren von Schenkelabschnitten (142, 143) der Federzunge (127) drückt, wodurch eine Spitze der Federzunge (127) zu einer Seite des Verschlusses (128) angehoben wird.

2. Hermetischer Verdichter nach Anspruch 1, wobei die Spitze der Federzunge (127) einen Berührungsabschnitt des Verschlusses (128) berührt.

3. Hermetischer Verdichter nach Anspruch 1, wobei:
die mehreren Paare von Schenkelabschnitten (142, 143) auf beiden Seiten der Nähe des festen Endes der Federzunge (127) gefaltet sind und das feste Ende der Federzunge zwischen der Ventilplatte (113) und dem Verschluss (128) gehalten wird, wodurch die Auslasszunge und die Federzunge mit einem vorbestimmten Abstand an der Ventilplatte befestigt sind.

## Revendications

1. Compresseur hermétique, comprenant :
un cylindre (110) ;
un piston (120) qui effectue un mouvement de va-et-vient dans le cylindre ;
une plaque porte-soupape (113) pour assurer l'étanchéité d'une extrémité d'ouverture du cylindre, la plaque porte-soupape ayant un dispositif de soupape de refoulement (114) sur un côté opposé au cylindre ; et
une tête (115) formant une chambre de refoulement pour le stockage du dispositif de soupape de refoulement,
le dispositif de soupape de refoulement (114) comportant :
un orifice de refoulement (123) disposé dans la plaque porte-soupape (113) et communiquant avec un espace intérieur du cylindre (110) ;
un siège de soupape (124) formé sur un côté opposé de l'orifice de refoulement par rapport au cylindre ;
un clapet de refoulement de type en porte à faux (126) réalisé en un matériau de ressort à lame, et ayant une section d'ouverture/fermeture pour ouvrir et fermer le siège de soupape ;
un clapet à ressort de type en porte à faux (127) disposé sur un côté opposé du clapet de refoulement par rapport au siège de soupape, et étant plus long que le clapet de refoulement ; et
une butée (128) pour réguler une quantité d'ouverture du clapet de refoulement ;
dans lequel le clapet à ressort (127) est séparé du clapet de refoulement (126) au niveau d'une extrémité fixe du clapet à ressort par un jeu prédéterminé, et est séparé du clapet de refoulement au niveau de la section d'ouverture/fermeture du clapet de refoulement par un jeu plus grand que celui au niveau de l'extrémité fixe,
**caractérisé en ce que** la butée (128) appuie sur une position entre une pluralité de paires de sections de jambe (142, 143) du clapet à ressort (127), ce qui permet de soulever une pointe du clapet à ressort (127) à un côté de la butée (128).

2. Compresseur hermétique de la revendication 1, dans lequel, la pointe du clapet à ressort (127) touche une section de contact de la butée (128).

3. Compresseur hermétique de la revendication 1, dans lequel,
la pluralité de paires de sections de jambe (142, 143) sont pliées sur les deux côtés de proximité de l'extrémité fixe du clapet à ressort (127), et l'extrémité fixe du clapet à ressort est maintenue entre la plaque porte-soupape (113) et la butée (128), ce qui permet de fixer le clapet de refoulement et le clapet à ressort sur la plaque porte-soupape avec un jeu prédéterminé.
